# EUROPÄISCHE PATENTSCHRIFT

(11) **EP 1 193 445 B1**
(45) Veröffentlichungstag und Bekanntmachung des Hinweises auf die Patenterteilung: **24.07.2013**
(21) Anmeldenummer: 01810897.7
(22) Anmeldetag: 17.09.2001
(51) Int. Cl.: B03C 3/41, B01D 46/42, F23J 15/02, B01D 46/50, B03C 3/06

(54) **Vorrichtung zur Rauchgasreinigung an Kleinfeuerungen**
Device to clean exhausts from small heating systems
Dispositif pour épurer les gaz de combustion de petites installations de chauffe

(30) Priorität: 02.10.2000 CH 19292000
(43) Veröffentlichungstag der Anmeldung: 03.04.2002
(73) Patentinhaber: Eidgenössische Materialprüfungs- und Forschungsanstalt EMPA, 8600 Dübendorf (CH)
(72) Erfinder: Brenn, Jürg, 8044 Zürich (CH); Schmatloch, Volker, 49324 Melle (CH)
(74) Vertreter: Felber, Josef

(56) Entgegenhaltungen:
- EP-A- 0 899 014
- EP-A- 0 995 494
- WO-A-00/33945
- DE-A- 3 324 803
- DE-A- 4 003 565
- PATENT ABSTRACTS OF JAPAN vol. 006, no. 223 (C-133), 9. November 1982 (1982-11-09) & JP 57 127458 A (TOYODA CHUO KENKYUSHO KK), 7. August 1982 (1982-08-07)
- PATENT ABSTRACTS OF JAPAN vol. 1997, no. 06, 30. Juni 1997 (1997-06-30) & JP 09 047686 A (GALAXY KK), 18. Februar 1997 (1997-02-18)

## Beschreibung

Die vorliegende Erfindung betrifft eine Vorrichtung zum Reinigen oder Filtern des Rauchgases von Kleinfeuerungen. Bei diesen Kleinfeuerungen mit Leistungen bis zu etwa 70kW handelt es sich um verschiedene Wärmerzeuger für den Raumwärmebedarf sowie auch zum Kochen. Namentlich zählen Chemineeöfen, Kachelöfen, Zimmeröfen, Kochherde und Heizkessel, die mit Holz befeuert werden, dazu.

Die Nutzung von Holz als nachwachsender Brennstoff nimmt seit einigen Jahren wieder stetig zu. In der Schweiz zum Beispiel nahm gemäss der Schweizerischen Holzenergiestatistik [EDMZ] die jährlich genutzte Holzenergiemenge innerhalb des Jahrzehnts von 1990 bis 2000 stark zu. Die Anzahl von Einzelraumheizungen nimmt in der Schweiz tendenziell zu, während jene von ganzen Gebäudeheizungen abnimmt. Die moderne, hochwärmedämmende Bauweise wird künftig diesen Trend noch verstärken. Bei Niedrigenergiehäusern muss nämlich nur noch ein kleiner Restwärmebedarf durch eine Zusatzheizung gedeckt werden und immer öfter kommt hierzu ein zentraler Holz-, Cheminee- oder Speicherofen zum Einsatz, also eine Kleinfeuerung.

Bei all diesen Kleinfeuerungen liegt die Verantwortung für die Brennstoffqualität und die Feuerungseinstellung in erster Linie beim Betreiber. Den Optimierungsmöglichkeiten der anlagenseitigen Feuerungstechnik sind relativ enge Grenzen gesetzt. Und deshalb entlassen diese Kleinfeuerungen gemessen am gesamten Rauchemissionsaufkommen unverhältnismässig viele Schadstoffe in die Atmosphäre. Dazu kommt, dass infolge der missbräuchlichen Abfallbeseitigung, zu der solche Kleinfeuerungen die Betreiber oft verleiten, indem die Betreiber darin Plastik, Karton, Papier und Altholz verbrennen, allein aus diesen Kleinfeuerungen im Fall der Schweiz landesweit mehr als doppelt so viele Dioxine und Furane entweichen als in allen Sondermüll- und Kehrichtverbrennungsanlagen zusammengenommen! Beim zuständigen Schweizer Bundesamt rechnet man, dass im Jahr 2000 die Staubemissionen aus Kleinfeuerungen bereits 5 bis 6% der jährlichen Gesamtstaubemissionen ausmachen. Das entspricht immerhin etwa einem Drittel der Partikelemissionen des gesamten Motorfahrzeugverkehrs, und diese Staubteile aus Kleinfeuerungen treten vor allem in städtischen Bezirken und Agglomerationen auf, wo derartige Kleinfeuerungen eben in grosser Anzahl vorhanden sind. Lufthygienisch relevant für die Gesundheit des Menschen sind Teilchen mit einem aerodynamischen Durchmesser von deutlich weniger als 10µm, weil sich Teilchen ab einer solchen Kleinheit in der Lunge festsetzen können. In der Schweiz ist deswegen seit 1998 ein Immissionsgrenzwert für Teilchen bis maximal diese Grösse festgesetzt worden, welcher jedoch an mehreren Messstellen überschritten wird. Diese Partikel binden auch Dioxine, welche nach der Partikeldeposition auf Boden und Pflanzen über die Nahrungskette von den Menschen aufgenommen werden. Nun haben an der Eidgenössischen Materialprüfungs- und Forschungsanstalt (EMPA) durchgeführte Messungen des Grössenspektrums der von Kleinfeuerungen ausgestossenen Partikel aufgezeigt, dass die emittierten Partikel von Holzfeuerungen im kritischen Bereich von unter 10 µm Durchmesser liegen. Es ist deshalb notwendig, auch im Bereich von einfachen Holzfeuerungsanlagen geeignete Rauchgaseinrichtungen einzubauen, um diese Kleinstpartikel zurückzuhalten.

Aus der WO 00 33945 ist ein Verfahren und eine Vorrichtung zur Rauchgasreinigung an Kleinfeuerungen mit einer Elektrode im Innern des Rauchgaskanals bekanntgeworden, wobei die Elektrode an einem Isolator befestigt ist und senkrecht in den Rauchgaskanal hängt. Das freie Ende ist mit einem Gewicht zur Stabilisierung versehen. In einer zweiten Ausführung ist die Elektrode horizontal in einem H-förmigen Rauchgas-Abzugsystem gespannt. In dieser Ausführung ist der Hochspannungsgenerator am Abzugsystem aussen befestigt. Die JP 57 127 458 zeigt eine Vorrichtung zum elektrostatischen Abgasreinigen im Auspuffsystem eines Verbrennungsmotors. Eine stabförmige Elektrode erstreckt sich axial in einem zylindrischen Rohr, das die Gegenelektrode bildet und im Inneren des Auspuffrohrs angeordnet ist. Aus der DE 40 03 565 A geht eine Vorrichtung zum elektrostatischen Abtrennen der partikelförmigen Stoffe aus Rauchgasen hervor. Die Abstreifvorrichtung (Stripper) ist in den Rauchgaskanal eingesetzt. Die Rauchgasleitung besteht aus einem Stahlrohr und bildet die eine Elektrode. Die andere Elektrode tritt durch einen Isolator ein und verläuft längs der Achse des Rohres und ist teilweise isoliert. Diese Elektrode ist mittels Isolatoren gegen die Rohrwand hin abgestützt. In den gezeigten Ausführungsvarianten bildet der Isolator, durch den die Elektrode in das Rohr geführt ist, den Rohrabschluss. An der Innenseite des Deckels ist ein über Isolatoren gespannter Elektrodendraht oder ein von einem Isolator gehaltener, selbsttragender Stab als Sprühelektrode sowie ein Hochspannungs-Transformator vorhanden. EP 0 899 014 A offenbart einen elektrischen Staubabscheider, dessen Innenelektrode an einer Halterung befestigt ist, die quer zur Rohrachse verläuft. DE 33 24 803 A zeigt ein Staubabscheidegerät zur Entnahme von Staubproben, mit dem ein elektrostatisches Feld zwischen einer Sprühelektrode und einer Rohrinnenwand aufgebaut wird. Die Abströmseite, das heisst eines der Rohrenden, ist mit Hilfe eines Verschlusskopfes abgeschlossen. Die Ein- und Auslässe sind wesentlich kleineren Durchmessers als das Abscheiderohr und daher ist diese Vorrichtung nicht für die Rauchgasreinigung an Kleinfeuerungsanlagen gedacht und geeignet. Die JP 09 047686, Galaxy KK vom 18. Februar 1997 zeigt einen Kamin mit Stahlplatten eingefasst, in den von oben ein Entladestab konzentrisch in den Kamin gehängt ist. Die Trägerstruktur für den Entladestab ist fest am Gebäude montiert. Daher kommt diese Konstruktion nicht für die Nachrüstung bestehender Kleinfeuerungen in Frage.

Gegenwärtig ist keine brauchbare Rauchgasreinigungsvorrichtung für Kleinholzfeuerungen erhältlich. Gründe dafür sind darin zu sehen, dass bei einem Rauchgasfilter für solche Kleinfeuerungen nur ein geringer Druckverlust tolerierbar ist, sodass eigentlich nur ein Elektrofilter in Frage kommt. Ein solches Elektrofilter ist aber in den bisher bekannten Ausführungen zu kompliziert, zu gross, zu wartungsintensiv und nicht zuletzt auch zu teuer für eine Kleinfeuerung.

Die Aufgabe der vorliegenden Erfindung ist es deshalb, eine Vorrichtung zur Rauchgasreinigung von Kleinfeuerungen zu schaffen, welche die folgenden Erfordernisse erfüllt: Sie muss eine effiziente Abscheidung der feinsten Partikel sicherstellen, das heisst von solchen mit einem Durchmesser <10µm, und hierbei eine Effizienz von über 80% aufweisen. Weiter soll diese Vorrichtung mit zumutbaren Anschaffungs- und Betriebskosten aufwarten und vom Betreiber selbst in hinreichend langen Intervallen leicht zu überwachen und zu reinigen sein. Sie soll auch nachträglich in einen Rauchgaskanal einbaubar sein und dies auch im Wohnbereich, wo ja viele derartige Feuerungen stehen.

Diese Aufgabe wird gelöst von einer Vorrichtung zur Rauchgasreinigung an Kleinfeuerungen mit einem Rauchgaskanal, bei dem das Rauchgas wenigstens in einem Abschnitt durch ein elektrisch leitfähiges Blechrohr geführt ist, und die sich durch die kennzeichnenden Merkmale des Patentanspruchs 1 auszeichnet.

Die Vorrichtung macht sich zunutze, dass bei Kleinfeuerungen bisher der Kamin ohnehin als Abscheidefläche wirkte, jedoch durchwegs nicht infolge einer elektrischen Ladung. Im Falle von Rauchgaskanälen in Stahlblech, Chromstahl oder Aluminium, wie sie heute verbreitet gebaut werden, verfügt man aber bereits über eine elektrisch leitfähige Abscheidefläche. Bei Kaminen aus Stein oder Kunststoff kann über eine bestimmte Wegstrecke ein Chromstahlrohr nachträglich längs in den Rauchgaskanal montiert werden. Die sofort ins Auge springenden Vorteile dieser Vorrichtung sind, dass es sich um ein Elektrofilter handelt, der keine gesonderten Abscheideplatten aufweist, und der keinen Ventilator benötigt, keine wesentliche Rauchgaskanal-Verengung mit sich bringt, und dessen Abscheidezone je nach Bedarf dimensioniert werden kann.

In den Zeichnungen sind vier Ausführungsbeispiele einer solchen Vorrichtung zur Rauchgasreinigung an Kleinfeuerungen dargestellt und sie werden in der nachfolgenden Beschreibung erklärt.
Es zeigt:
- Figur 1 :: Eine Vorrichtung zum Einbau in einen geraden, vertikalen Abschnitt eines elektrisch leitfähigen Ofenrohres;
- Figur 2 :: Eine Vorrichtung zum Einbau in einen horizontalen, elektrisch leitfähigen Ofenrohrabschnitt an der Stelle einer 90°-Krümmung des Ofenrohres;
- Figur 3 :: Eine Variante der Vorrichtung nach Figur 2 mit einem geraden Stab als Sprühelektrode;
- Figur 4 :: Eine Vorrichtung zum Einbau in einen vertikalen, elektrisch nicht leitfähigen Ofenrohrabschnitt an der Stelle einer 90°-Krümmung des Ofenrohres.

Elektrofilter funktionieren grundsätzlich nach dem Prinzip, dass elektrisch geladene feste oder flüssige Teilchen in einem elektrischen Feld abgelenkt werden. Die Russpartikel müssen daher zunächst elektrisch geladen werden. Die unipolar aufgeladenen Teilchen lagern sich hernach infolge der Wirkung des elektrostatischen Feldes an Abscheideplatten ab. Mit solchen Elektrofiltern lassen sich Stäube und Aerosole mit Korngrössen von 0.01 bis 60µm abscheiden. Die Effizienz der Abscheidung hängt auch von der Anströmgeschwindigkeit der Partikel und von der Staubkonzentration im strömenden Gas ab, sowie von der Temperatur und der Luftfeuchtigkeit im strömenden Gas.

Die hier vorgestellte Vorrichtung für Kleinfeuerungen ist in den bestehenden Rauchgaskanal einer solchen Feuerung einbaubar. Entweder ist dieser Rauchgaskanal bereits elektrisch leitfähig, indem das Ofenrohr etwa aus Stahlblech, Chromstahl oder Aluminium besteht, oder aber der Kamin ist gänzlich aus Stein und Mauerwerk oder aus Kunststoff gebaut. Im ersten Fall bildet die Vorrichtung einen Deckel, der gasdicht auf eine zugehörige Öffnung am Rauchgaskanal aufsetzbar ist. An der Innenseite dieses Deckels ist über Isolatoren eine Sprühelektrode gehalten. Weiter gehört zur Vorrichtung ein Hochspannungs-Transformator zum Aufbau einer Gleichspannung zwischen dieser Sprühelektrode und der Innenwand des bereits elektrisch leitfähigen Rauchgaskanalabschnittes. Im zweiten Fall wird ein elektrisch leitfähiges Rohrstück an den Deckel montiert, um eine Kollektorfläche zu bilden.

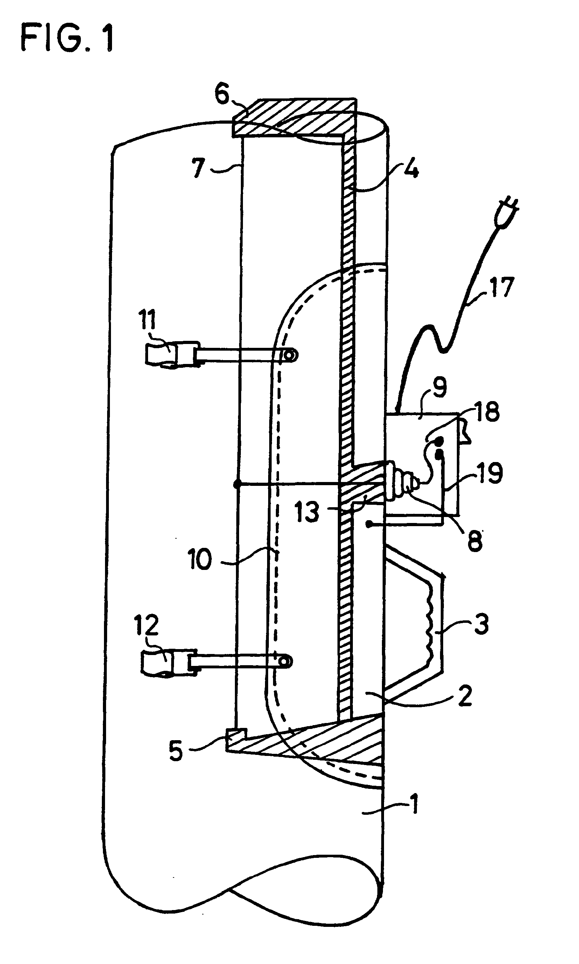

In der Figur 1 ist eine erste Ausführung dargestellt. Sie ist für den Einbau in einem geraden Abschnitt eines bestehenden, elektrisch leitfähigen Ofenrohrs 1 ausgelegt. Die Vorrichtung weist einen Deckel 2 aus Chromstahl mit einem Handgriff 3 auf. Auf der Innenseite des Deckels 2 ist eine bogenförmige, isolierende Halterung 4 mit ihren beiden Enden 5,6 angebaut. Zur Verstärkung ist dieser isolierende und wärmefeste Bogen 4 noch über einen weiteren Stützfuss 13 mit dem Deckel 2 verbunden. Zwischen diesen beiden Enden 5,6 der Halterung 4 ist ein Elektrodendraht 7 als Sprühelektrode gespannt. Dieser Elektrodendraht 7 ist über einen Isolator 8 durch den Deckel 4 hindurchgeführt und somit ist eine Spannung gegenüber dem Deckel 2 an ihn anlegbar. Die Öffnung 10 am Ofenrohr 1 ist so gross gestaltet, dass beim Wegheben des Deckels 2 der daran montierte Bogen 4 und Draht 7 mühelos aus dem Ofenrohr 1 ausfahrbar ist. Der Deckel 2 wird mit geeigneten Spannmitteln 11,12 gasdicht auf den Rand der Öffnung 10 am Ofenrohr 1 gedrückt. Die gasdichte Dichtung darf dabei elektrisch leitfähig sein. In jedem Fall erfolgt eine elektrische Verbindung von Deckel 2 und Ofenrohr 1 über die Spannmittel 11,12, welche elektrisch leitfähig sind. Der Hochspannungs-Transformator 9 mit Gleichrichterfunktion wird vorteilhaft fest an die Aussenseite des Deckels 2 angebaut, sodass die ganze Vorrichtung eine Baueinheit bildet. Hierzu muss er selbstverständlich sowohl elektrisch als auch thermisch vom Deckel 2 isoliert angebaut sein. Über ein Netzkabel 17 wird er mit Strom versorgt. Der Hochspannungsausgang des Trafos wird durch den Isolator 8 hindurch an die Sprühelektrode 7 geführt. Der andere Pol 19 liegt auf Erdpotential und wird über den Deckel 2 mit der Abscheidefläche elektrisch leitend verbunden. Das Ofenrohr 1 wird an geeigneter Stelle geerdet. Somit ist ein Elektrofilter gebildet, wobei der Draht 7 die Sprühelektrode bildet, und die Innenseite des Deckels 2 wie auch die Innenseite des Ofenrohrs 1 über die Länge des Elektrodendrahtes 7 hinaus die Niederschlagselektrode oder Kollektorfläche bildet, sodass also der gesamte Kamin, soweit er aus leitfähigem Material besteht, als Kollektorfläche wirken kann. Zur regelmässigen Reinigung der Niederschlagselektrode, das heisst der Innenwand des Ofenrohrs 1 und des Deckels 2, wird zunächst der Transformator 9 ausgeschaltet. Dann werden die Spannmittel 11,12 gelöst und der Deckel 2 wird mit einer Hand am Griff 3 ergriffen und vom Ofenrohr 1 weggehoben, und er wird unter Ausfahren des Bogens 4 und des Elektrodendrahtes 7 vom Ofenrohr 1 entfernt. Hernach kann sowohl die Innenseite des Deckels 1 wie auch die Innenseite des Ofenrohrs 1 mit einem feuchten Lappen abgerieben werden, wodurch die elektrisch zurückgehaltenen Teilchen weggewischt werden und am Lappen hängen bleiben. Als Alternative können die eingesammelten Partikel auch mit der Staubsaugerbürste weggewischt und abgesaugt werden. Der Bogen 4 mit dem Elektrodendraht 7 wird dann wieder ins Ofenrohr 1 eingeführt und der Deckel 2 gasdicht auf die Öffnung aufgesetzt und verspannt. Die gereinigten Kollektorflächen sind nun wieder frei, um mit neuen Partikeln beschlagen zu werden, weil jetzt auch die elektrostatische Anziehungskraft wieder voll wirksam ist.

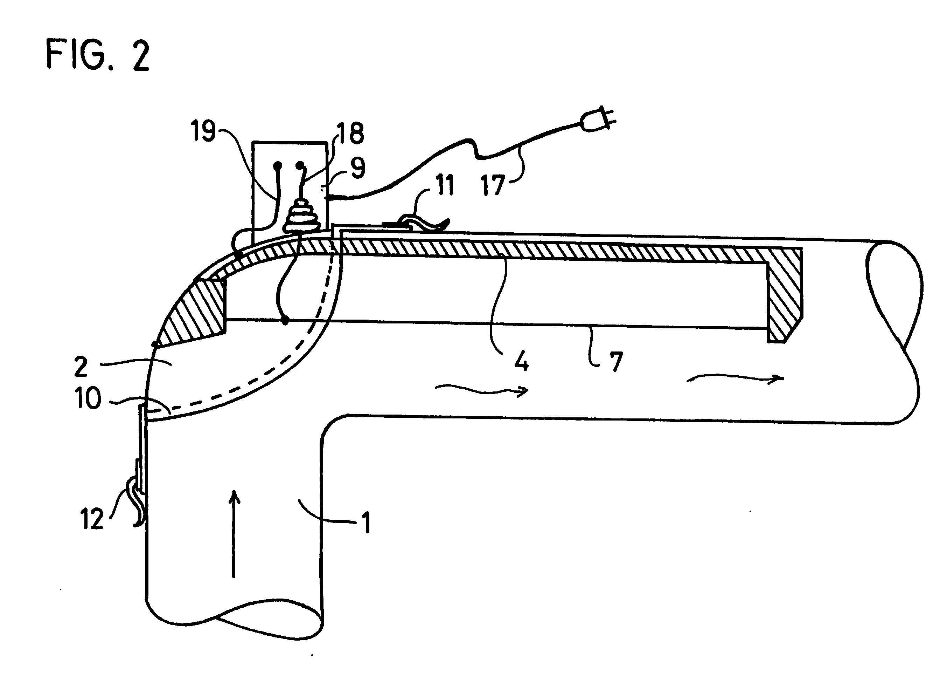

In Figur 2 ist eine Variante der Vorrichtung gezeigt, wie sie an der Krümmung eines Ofenrohres 1 einbaubar ist und sich über einen horizontalen Abschnitt des Rauchgaskanals erstreckt. Der Deckel 2 hat hier die Form einer schalenförmigen Kappe, auf dessen Innenseite sich die bogenförmige Halterung 4 mit dem auf sie aufgespannten Draht 7 etwa in einem Winkel von 45° zur allgemeinen Montageebene des Deckels 2 längs des Ofenrohrs erstreckt. Der Bogen 4 und der von ihm gehaltene Elektrodendraht 7, welcher als Sprühelektrode wirkt, erstrecken sich axial längs des Ofenrohrs 1. Das Ofenrohr 1 wirkt infolge seiner Leitfähigkeit als Niederschlagselektrode. Der Hochspannungstrafo 9 mit Gleichrichterfunktion sitzt auf dem Deckel 2, welcher wiederum mittels elektrisch leitender Spannmittel 11,12 gasdicht ans Ofenrohr 1 montiert ist, sodass dieses selbst über die Länge des Elektrodendrahtes 7 als Niederschlagselektrode wirkt.

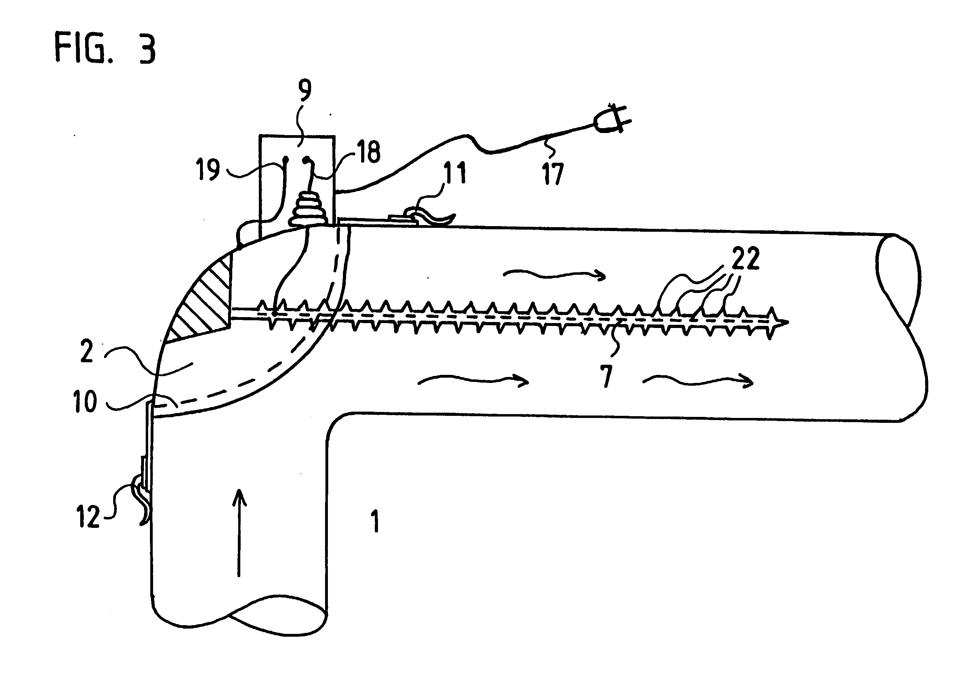

Die Figur 3 zeigt eine Variante der Vorrichtung nach Figur 2, wobei hier anstelle eines zwischen zwei Enden eines Bogens gespannten Elektrodendrahtes eine selbsttragende Stabelektrode zum Einsatz kommt. Eine solche Stabelektrode kann wie hier gezeigt aus einem Blechstreifen bestehen, der stark genug ist, dass er sich selbst tragen kann. Er wird zum Beispiel mittels Stanzens hergestellt, sodass er wie hier gezeigt eine Vielzahl von abstehenden Zacken 22 aufweist, die der besseren Ablösung der Elektronen förderlich sind. Anstelle eines solchen Blechstreifens kann aber auch ein Draht von genügender Stärke eingesetzt werden, der Stacheln wie jene an einem üblichen Stacheldraht aufweist, an deren Spitzen die Elektronen leichter abgelöst werden, oder es können Drahtstücke quer an diesem Stab angeschweisst sein. Das entscheidende Merkmal der Sprühelektrode ist das Vorhandensein vieler sehr kleiner Radien, bei denen hohe lokale Feldstärken auftreten.

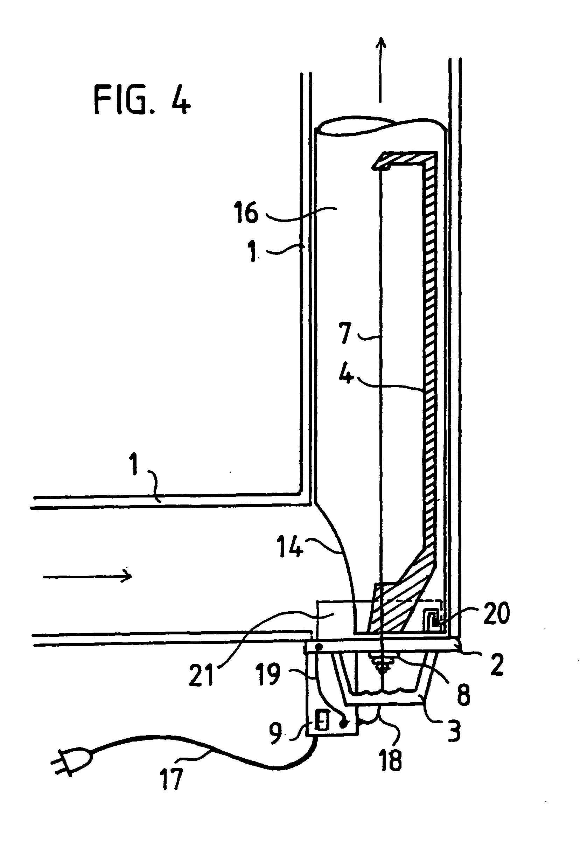

Wo ein Rauchgaskanal eine Richtungsänderung erfährt und nicht aus leitfähigem Material gebaut ist, kann die Vorrichtung zum Reinigen des Rauchgases als Baueinheit hergestellt werden, welche selbst auch eine Niederschlagselektrode einschliesst. Diese Niederschlagselektrode wird als Rauchgaskanalabschnitt ausgeführt. In Figur 4 ist ein Bespiel einer solchen Baueinheit gezeigt. Ein Kunststoff-Kamin 15 ist hier rechtwinklig abgebogen. Die Vorrichtung zur Rauchgasreinigung schliesst einen von unten aufgesetzten Deckel 2 ein, an dessen Innenseite ein sich nach oben erstreckendes Blechrohr 16 angebaut ist. Dieses elektrisch leitende, vorzugsweise aus Chromstahlblech hergestellte Blechrohr 16 ist knapp in den Rauchgaskanal einpassend dimensioniert und konzentrisch zum Draht 7 angeordnet. Der Deckel 2 und dieses Blechrohr 16 sind elektrisch leitend verbunden und das Blechrohr 16 wirkt im Innern des Kamins als Niederschlagselektrode. An seinem in der Zeichnung unteren Ende ist es auf seiner einen Seite ausgeschnitten, sodass die Rauchgase durch diese Ausnehmung 14 einströmen können und dann wie hier gezeigt horizontal durch den Kamin weiterströmen können. Zentral im Blechrohr 16 verläuft die gespannte Sprühelektrode 7 in Form eines Drahtes 7, der auf der bogenförmigen Halterung 4 aufgespannt ist. Der Deckel 2 ist mit einem Griff 3 ausgerüstet und trägt auch den Hochspannungstrafo 9. Der eine Pol 18 ist über den Isolator 8 mit dem gespannten Elektrodendraht 7 verbunden, während der andere Pol 19 mit dem Deckel 2 und dem an ihm angebauten Blechrohr 16 sowie der Erde verbunden ist. Zur Befestigung des Blechrohres 16 am Deckel 2 kann dieser auf seiner Innenseite einen Kragen 21 aufweisen, über den das Blechrohr 16 stülpbar ist. Der obere Blechrohrrand 16 kann mit dem Kragen 21 sodann einen Bajonettverschluss 20 bilden, sodass das Blechrohr 16 mühelos vom Deckel 2 entfernt werden kann. Zum Reinigen kann man es einfach in ein Wasserbad legen oder unter fliessendem Wasser mit einem Lappen reinigen.

Der Hochspannungstransformator 9 mit Gleichrichterfunktion für den Betrieb einer solchen Vorrichtung für Kleinfeuerungen weist einen typischen Anschlusswert von zwischen 20 und 200VA auf und kann mit 220V/50Hz bzw. 110V/60Hz Wechselstrom betrieben werden. Die Aufladung der Sprühelektrode kann negativ oder positiv zur Erde erfolgen. Die Abreinigung des Kollektorteils kann nach Ausbau des Elektrodendrahtes 7 mit der Halterung 4 problemlos von Hand unter Zuhilfenahme von Wasser oder speziellen Reinigungsmitteln erfolgen. Bei üblichem Betrieb einer Kleinfeuerung als Hauptwärmeerzeuger sollte diese Reinigung während der Heizperiode je nach Grösse der Abscheidefläche etwa alle 1 bis 2 Monate durch den Betreiber erfolgen, bei sporadischem Betrieb in entsprechend längeren Zyklen. Alle ein bis zwei Jahre sollte zudem eine Generalreinigung durch den Kaminfeger durchgeführt werden, welcher hierzu spezielle Reinigungsmittel einsetzen kann.

## Patentansprüche

1. Vorrichtung zur Rauchgasreinigung an mit Holz befeuerten Kleinfeuerungen mit einem Rauchgaskanal, bei dem das Rauchgas wenigstens in einem Abschnitt durch ein elektrisch leitfähiges Blechrohr geführt ist, **dadurch gekennzeichnet, dass** sie einen elektrisch leitfähigen Deckel (2) einschliesst, der gasdicht und leitend mittels Spannmitteln (11,12) lösbar gehalten auf eine seitliche Öffnung (10) am Rauchgaskanal (1) aufsetzbar ist, sodass seine Innenseite einen Teil der Abscheidefläche bildet, und dass an der Deckel-Innenseite ein über Isolatoren (8) gespannter Elektrodendraht (7) oder ein von einem Isolator gehaltener, selbsttragender Stab (7) als Sprühelektrode vorhanden ist, wobei sich der gespannte Elektrodendraht (7) oder der selbsttragende Stab (7) mindestens mehrheitlich konzentrisch zum Rohrquerschnitt des elektrisch leitfähigen Blechrohrs aus Stahlblech, Chromstahl oder Aluminium erstreckt und dieses Blechrohr sowie der elektrisch leitfähige Deckel als Gegenelektrode dazu wirkt, sowie dass sie einen Hochspannungs-Transformator mit Gleichrichterfunktion auf der Deckelaussenseite angebaut ist zum Aufbau einer Gleichspannung zwischen der Sprühelektrode (7) einerseits und dem Deckel (2) und dem Blechrohr des Rauchgaskanals (1) andrerseits aufweist.

2. Vorrichtung nach Anspruch 1, ***dadurch gekennzeichnet,* dass** an der Innenseite des Deckels (2) eine bogenförmige Halterung (4) aus isolierendem Material vorhanden ist, zwischen deren Enden (5,6) der Elektrodendraht (7) der Sprühelektrode konzentrisch zum Blechrohr des Rauchgaskanals (1) gespannt ist.

3. Vorrichtung nach einem der vorhergehenden Ansprüche, ***dadurch gekennzeichnet,* dass** die Sprühelektrode (7) sich bei auf die Öffnung (10) aufgesetztem Deckel (2) mehrheitlich zentral und axial längs des Rauchgaskanals (1) erstreckt.

4. Vorrichtung nach einem der vorhergehenden Ansprüche, ***dadurch gekennzeichnet,* dass** die Sprühelektrode (7) sich bei auf die Öffnung (10) aufgesetztem Deckel (2) mindestens mehrheitlich zentral und axial längs des Rauchgaskanals (1) erstreckt und konzentrisch zum Elektrodendraht (7) angeordnet ein diesen umschliessendes, elektrisch leitfähiges Blechrohr (16) auf der Innenseite des Deckels (2) angebaut ist, welches knapp in den Rauchgaskanal (1) einpassend dimensioniert ist und elektrisch leitend mit dem Deckel (2) verbunden ist, sodass es eine Entladungselektrode bildet, und dass dieses Blechrohr (16) eine seitliche Eintrittsöffnung (14) aufweist.

5. Vorrichtung nach Anspruch 4, ***dadurch gekennzeichnet,* dass** das umschliessende, elektrisch leitfähige Blechrohr (16) lösbar auf der Innenseite des Deckels (2) angebaut ist.

6. Vorrichtung nach Anspruch 5, ***dadurch gekennzeichnet,* dass** das umschliessende, elektrisch leitfähige Blechrohr (16) auf einen an der Innenseite des Deckels (2) abstehenden Kragen stülpbar ist und darauf mittels eines Bajonettverschlusses (20) gesichert ist.

## Claims

1. Device for flue gas cleaning at small furnaces with a flue gas duct that is fuelled with wood, in which the flue gas is led through an electrically conducting metal pipes in at least one section, **characterised in that**, it includes an electrically conducting cover (2), that can be attached gas-tight and conducting by means of a clamping device (11, 12), securely attached at a lateral opening (10) on the flue gas duct (1), so that its inner side forms a part of the separating surface and that an electrode wire (7) stretched over insulators (8) or a self-supporting rod (7) held by an insulator is available as discharge electrode on the inner side of the cover, whereby the electrode wire (7) or the self-supporting rod (7) extend at least predominantly concentric to the pipe cross-section of the electrically conducting metal pipe made of sheet metal, chrome steel or aluminium. This metal pipe and the electrically conducting cover work as a counter electrode and it has a high-voltage transformer with rectifier function on the outer side of the cover for creating DC voltage between the electrode wires (7) on one hand, and the cover (2) and the plate tube of the flue gas duct (1) on the other hand.

2. Device according to claim 1, ***characterised in that**,* the inner side of the cover (2) has an arched holder (4) made of insulating material, between the ends (5,6) of which the electrode wire (7) of the discharge electrode is stretched concentric to the metal pipe of the flue gas duct (1).

3. Device according to one of the previous claims, ***characterised in that*** the discharge electrode (7) stretches at the cover (2) fitted at the opening (10), predominantly centrally and axially along the flue gas duct(1).

4. Device according to one of the previous claims, ***characterised in that*** the discharge electrode (7) stretches at the cover (2) fitted at the opening (10), predominantly centrally and axially along the flue gas duct (1) and an electrically conducting metal pipe (16) enclosing this and located concentric to the electrode wire (7) is installed on the inner side of the cover (2). This pipe is dimensioned tight-fitting and concisely in the flue gas duct (1) and is - connected electrically conducting to the cover (2), so that it forms a discharge electrode. This metal pipe (16) has a lateral entrance window (14).

5. Device according to claim 4, ***characterised in that**,* the enclosing, electrically conducting metal pipe (16) is installed on the inner side of the cover (2).

6. Device according to claim 5, ***characterised in that**,* the enclosing, electrically conducting metal pipe (16) can be folded back on stand-out collar in the inner side of the cover (2) and is secured on it by means of a bayonet joint (20).

## Revendications

1. Dispositif pour l'épuration des fumées de petits foyers avec cheminée alimentés au bois dans lesquels les fumées passent dans des cheminées électriquement conductrices au moins sur une partie, **caractérisée par le fait qu'**elle comprend un couvercle électriquement conducteur (2) qui peut être attaché hermétiquement et galvaniquement à l'aide d'un dispositif de serrage (11, 12), attaché fermement à une ouverture latérale (10) sur la cheminée (1) de façon à ce que sa face interne forme une partie de la surface de séparation et qu'un fil d'électrode (7) placé sur des isolateurs (8) ou une tige de maintien (7) tenue par un isolateur soit disponible comme électrode de décharge sur la face interne du couvercle, là où le fil d'électrode (7) ou la tige de maintien (7) s'étend au moins en plus grande partie de façon concentrique par rapport à la section de la cheminée métallique électriquement conductrice faite d'une feuille de métal, d'acier chromé ou d'aluminium. Cette cheminée métallique et le couvercle électriquement conducteur agissent comme une contre-électrode qui dispose d'un transformateur haute tension avec fonction de redresseur du côté extérieur du couvercle pour générer une tension continue entre les fils d'électrode (7) d'un côté et, de l'autre côté, le couvercle (2) et le tube de la cheminée (1).

2. Le dispositif selon la revendication 1, ***caractérisé par le fait que*** le côté interne du couvercle (2) présente un support courbé (4) fait dans un matériau isolant, entre les extrémités (5, 6) duquel le fil d'électrode (7) de l'électrode de décharge est placé de façon concentrique par rapport au tube métallique de la cheminée (1).

3. Le dispositif selon une des revendications précédentes, ***caractérisé par le fait que*** l'électrode de décharge (7) s'étend sur le couvercle (2) placé sur l'ouverture (10), de façon principalement centrale et axiale le long de la cheminée (1).

4. Le dispositif selon une des revendications précédentes, ***caractérisé par le fait que*** l'électrode de décharge (7) s'étend sur le couvercle (2) placé sur l'ouverture (10), de façon principalement centrale et axiale le long de la cheminée (1) et un tube métallique électriquement conducteur (16) recouvrant celui-ci et placé de façon concentrique par rapport au fil de l'électrode (7) est installé sur la face interne du couvercle (2). Le tube est dimensionné pour être étanche et s'adapter dans la cheminée (1) et est électriquement connecté au couvercle (2) de façon à former une électrode de décharge. Le tube métallique (16) présente une fenêtre d'entrée latérale (14).

5. Le dispositif selon la revendication 4, ***caractérisé par le fait que*** le tube métallique électriquement conducteur (16) est installé sur la face interne du couvercle (2).

6. Le dispositif selon la revendication 5, ***caractérisé par le fait que*** le tube métallique électriquement conducteur (16) peut être replié sur le collier en saillie sur la face interne du couvercle (2) et est maintenu dessus à l'aide d'un joint en baïonnette (20).
